# FASCICULE DE BREVET EUROPEEN

(11) **EP 1 144 883 B1**
(45) Date de publication et mention de la délivrance du brevet: **15.02.2006**
(21) Numéro de dépôt: 00971465.0
(22) Date de dépôt: 20.10.2000
(51) Int. Cl.: F16D 65/14

(54) **ACTIONNEUR AVEC UN PISTON A COMMANDE PIEZO ELECTRIQUE**
AKTOR MIT EINEM PIEZOELEKTRISCHEM, BETÄTIGTEM KOLBEN
ACTUATOR WITH PIEZOELECTRIC CONTROLLED PISTON

(30) Priorité: 21.10.1999 FR 9913130
(43) Date de publication de la demande: 17.10.2001
(73) Titulaire: SAGEM S.A., 75116 Paris (FR)
(72) Inventeur: AUDREN, Jean-Thierry, F-78470 Saint-Rémy-lès-Chevreuse (FR)
(74) Mandataire: Texier, Christian
(86) Numéro de dépôt international: PCT/FR2000/002925
(87) Numéro de publication internationale: WO 2001/029443

(56) Documents cités:
- EP-A- 0 518 262
- FR-A- 2 702 895
- PATENT ABSTRACTS OF JAPAN vol. 009, no. 315 (E-365), 11 décembre 1985 (1985-12-11) & JP 60 148389 A (MATSUSHITA DENKO KK), 5 août 1985 (1985-08-05)
- PATENT ABSTRACTS OF JAPAN vol. 017, no. 083 (M-1369), 18 février 1993 (1993-02-18) & JP 04 282035 A (AISIN SEIKI CO LTD), 7 octobre 1992 (1992-10-07)

## Description

La présente invention est relative à un actionneur à piston actif.

Elle trouve en particulier avantageusement application pour les actionneurs de frein, notamment dans le domaine de l'aéronautique.

Généralement, les actionneurs de frein connus à ce jour sont des actionneurs de type hydraulique qui permettent des efforts très importants, tout en présentant une bonne capacité de rattrapage du jeu lié à l'usure, aux changements de température, etc...

Ces actionneurs présentent toutefois des inconvénients liés à l'utilisation d'un fluide hydraulique : risques de fuites, nécessité d'un générateur de pression, etc...

Un but de l'invention est de proposer un actionneur qui ne présente pas les inconvénients des actionneurs hydrauliques.

Il a déjà été proposé des actionneurs comportant un piston constitué de plusieurs tronçons magnéto-strictifs successifs, aptes à être commandés indépendamment les uns des autres.

On pourra à cet égard se référer aux différents brevets suivants : US 5.281.875, US 5.317.223, US 5.039.894.

De tels actionneurs nécessitent de prévoir autour du piston des moyens de génération de champ magnétique qui sont complexes et particulièrement encombrants.

Notamment, à volume d'encombrement identique, ils ne permettent pas d'engendrer les mêmes efforts qu'un actionneur hydraulique.

On connaît déjà par ailleurs des actionneurs piezo-électriques qui comportent une chemise de coulissement et un piston apte à se déplacer axialement dans ladite chemise, ledit piston comportant une pluralité de tronçons successifs en matériau multicouches piezo électriques, des moyens de commande étant aptes à appliquer sur lesdits tronçons des tensions de commande pour dilater des tronçons de façon à ce qu'ils se bloquent par rapport à la chemise de coulissement et allonger d'autres tronçons à l'intérieur de ladite chemise, ces dilatations et allongements étant commandés par lesdits moyens de commande selon des séquences déplaçant le piston dans ladite chemise.

De tels actionneurs ont notamment déjà été décrits dans FR 2 702 895 et dans l'abrégé du brevet japonais JP 60 148389. Ils sont classiquement constitués par des tronçons destinés les uns à se dilater perpendiculairement au sens de déplacement du piston, les autres à se dilater selon la direction de déplacement, ces différents tronçons étant agencés selon des structures en H.

On comprend que de telles structures restent d'une réalisation très onéreuse et compliquée.

L'invention propose quant à elle une structure d'actionneur piezo-électrique particulièrement simple.

Notamment, les moyens de commande de l'actionneur de l'invention sont aptes à appliquer à chacun des tronçons une tension qui raccourcit ledit tronçon et le bloque dans la chemise de coulissement et une tension inverse qui libère ledit tronçon par rapport à ladite chemise et qui l'allonge dans celle-ci, l'une et l'autre de ces deux tensions étant successivement appliquées audit tronçon lors d'une séquence de déplacement du piston, chaque tronçon étant ainsi utilisé en blocage et en allongement lors d'une telle séquence.

Une telle structure d'actionneur est capable d'engendrer des pressions très importantes (de 50 à 100 Mpa) du même ordre de grandeur que les plus fortes pressions régnant dans les circuits hydrauliques actuels. A diamètre équivalent, le piston piezo électrique est capable d'engendrer les mêmes efforts qu'un piston hydraulique.

Un tel actionneur est avantageusement complété par les différentes caractéristiques suivantes prises seules ou selon toutes leurs combinaisons techniquement possibles :
- un tronçon présente une pluralité d'électrodes qui s'étendent transversalement par rapport à l'axe du piston, au moins une métallisation de commande électrique s'étendant sur au moins une partie de la hauteur du piston jusqu'à un renfoncement dans lequel la métallisation est en contact avec une électrode sur deux du tronçon, les électrodes du tronçon étant alternativement décalées par rapport audit renfoncement, la métallisation étant, au niveau des tronçons qu'elle n'alimente pas, décalée par rapport au renfoncement de façon à ne pas être en contact avec les électrodes de ces tronçons ;
- le piston comporte une enveloppe métallique dans laquelle les tronçons sont reçus, une métallisation de commande étant reçue dans une rainure qui s'étend dans la hauteur du piston ;
- la chemise de coulissement comporte un cylindre intérieur, un cylindre extérieur et un cylindre intermédiaire, le matériau du cylindre intermédiaire présentant un coefficient de dilatation supérieur à ceux des cylindres intérieur et extérieur ;
- le cylindre intermédiaire présente des fentes qui s'étendent radialement de sa surface intérieure vers sa surface extérieure ;
- les moyens de commande comportent des moyens pour commander la déformation des tronçons selon une séquence telle que dans un premier temps, le piston avance de façon à rattraper le jeu qui le sépare de la surface sur laquelle il doit venir en appui et dans un deuxième temps applique un effort sur ladite surface.

D'autres caractéristiques et avantages de l'invention ressortiront encore de la description qui suit qui est purement illustrative et non limitative et qui doit être lue sur les figures annexées sur lesquelles :
- les figures 1 et 2 sont des représentations schématiques d'un actionneur conforme à un mode de réalisation possible de l'invention et notamment de son piston ;
- les figures 3a à 3e sont des représentations schématiques illustrant le fonctionnement de l'actionneur dont le piston est représenté sur la figure 1 ;
- la figure 4 est une représentation schématique en coupe axiale illustrant la disposition des électrodes dans un piston d'un actionneur conforme à un mode de réalisation possible de l'invention ;
- la figure 5 est une représentation en coupe partielle d'un détail du piston de la figure 4 ;
- la figure 6 est une représentation schématique en élévation de l'actionneur de la figure 5 ;
- les figures 7a à 7c illustrent les connexions des différents groupes de céramiques ;
- la figure 8 est une représentation schématique en coupe de la chemise de coulissement d'un actionneur conforme à un mode de réalisation possible de l'invention.

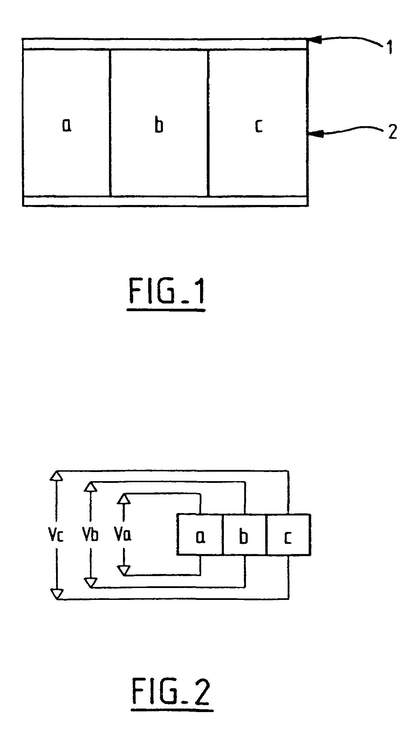

L'actionneur illustré sur les figures 1 et 2 comporte une chemise de coulissement 1 qui est un cylindre et un piston 2 apte à coulisser axialement dans ledit cylindre 1.

Le piston 2 est constitué d'une pluralité de tronçons de céramique piezo électrique. En l'occurrence, pour l'exemple illustré sur les figures 1 et 2 et utilisé dans la description qui suit, ces tronçons sont au nombre de trois et sont référencés par "a", "b", "c". Bien entendu, un plus grand nombre de tronçons peut être envisagé.

Les différents tronçons sont pourvus d'électrodes qui permettent de les commander indépendamment les uns des autres. Sur la figure 2, Va, Vb et Vc représentent les tensions de commande de chacun des tronçons "a", "b", "c".

Ces tronçons "a", "b", "c" peuvent être en céramique multicouches ou en céramique massive. L'utilisation de céramique multicouche présente l'avantage de permettre de pouvoir utiliser des tensions de commande réduites.

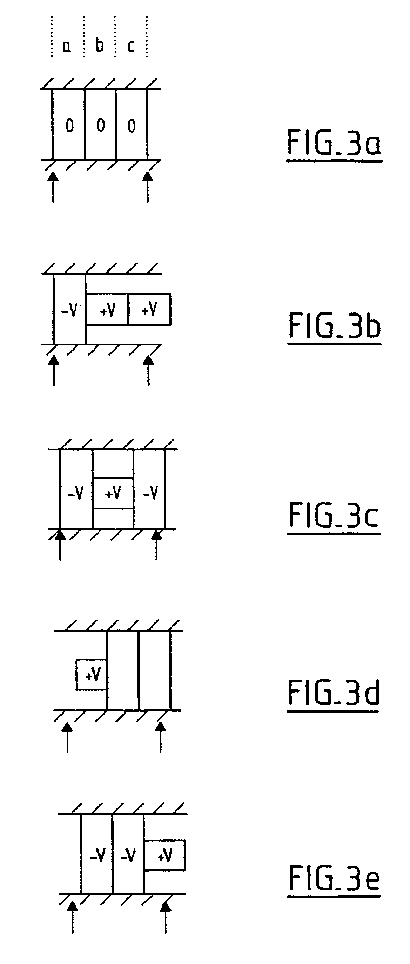

Le principe de fonctionnement d'une telle structure est illustré sur les figures 3a à 3e.

Pour rattraper le jeu du mécanisme de freinage, on déplace le piston 2 dans le cylindre 1 en combinant l'allongement/raccourcissement du matériau et sa striction.

On suppose pour la description suivante que chaque tronçon s'allonge en s'amincissant lorsque la tension appliquée est +V et se raccourcit en grossissant lorsque la tension est -V. De plus on suppose qu'au repos le jeu entre le piston 2 et la chemise de coulissement 1 est très faible de sorte que dès qu'un tronçon grossit, il se trouve bloqué et que lorsqu'il s'allonge, il se trouve libre.

Sur la figure 3a, le piston 2 est représenté au repos.

Les deux flèches sur cette figure 3a et qui sont ensuite reprises sur les figures 3b à 3e, ont été représentées pour permettre de matérialiser la progression du piston 2.

Dans un premier temps (figure 3b), une tension -V est appliquée sur le tronçon a, tandis qu'une tension +V est appliquée sur les deux autres tronçons b et c.

Seul le tronçon a est alors bloqué par rapport au cylindre 1. Les deux autres tronçons sont quant à eux allongés.

Dans un deuxième temps (figure 3c), on inverse la tension sur le tronçon c, la tension sur les deux autres tronçons a et b étant quant à elle inchangée.

Le tronçon c est ainsi maintenu dans son état allongé et le tronçon c vient se bloquer dans une position où il est avancé par rapport à la position qu'il occupait initialement (figure 3a).

Dans une troisième étape (figure 3d), on inverse les tensions de commande des tronçons a et b, de sorte que le tronçon b vient se bloquer par rapport au cylindre 1 en étant également avancé par rapport à la position qu'il occupait initialement (figure 3a), tandis que le tronçon a n'est plus bloqué par rapport à la chemise de coulissement

Dans une quatrième étape enfin (figure 3e), on inverse la tension de commande du tronçon a de sorte que l'on se retrouve alors dans une position où l'ensemble du piston a avancé par rapport à sa position de la figure 3a.

Ces quatre étapes peuvent ensuite être répétées jusqu'à ce que le jeu du piston par rapport au mécanisme de freinage ait été répété.

Lorsque le piston a ainsi rattrapé le jeu du mécanisme de freinage, il est immobilisé dans la position correspondant à celles représentées sur la figure 3b ou sur la figure 3e. La pression peut alors être contrôlée rapidement et finement en contrôlant Vb et Vc, Va restant égale à -V.

Les tronçons du piston 2 sont par exemple des cylindres ou disques multicouches de 25mm de diamètre et d'une épaisseur de 50mm.

Le piston 2 comporte avantageusement une enveloppe E (figure 1) qui est un manchon métallique de faible épaisseur.

Cette enveloppe métallique E présente l'avantage de permettre de résoudre les problèmes de tolérance de fabrication rencontrés avec des tronçons piezo électriques.

En particulier, le piston 2 muni de son enveloppe E peut être réusiné extérieurement afin d'obtenir le diamètre recherché avec une précision adéquate (meilleure que 5µm pour un diamètre de 25mm).

Cette enveloppe E est choisie d'un diamètre intérieur égal ou légèrement inférieur au diamètre de la céramique au repos.

Celle-ci est glissée dans ladite enveloppe E en imposant Va = Vb = Vc = +V , de façon à profiter de la striction des différents tronçons.

En variante ou en complément, l'enveloppe E peut être dilatée par chauffage lors de l'emmanchement, ce qui est notamment rendu possible grâce au fait que l'enveloppe E est d'épaisseur faible par rapport au diamètre du piston 2.

L'enveloppe E peut aussi recevoir un traitement de surface destiné à optimiser son coefficient de frottement.

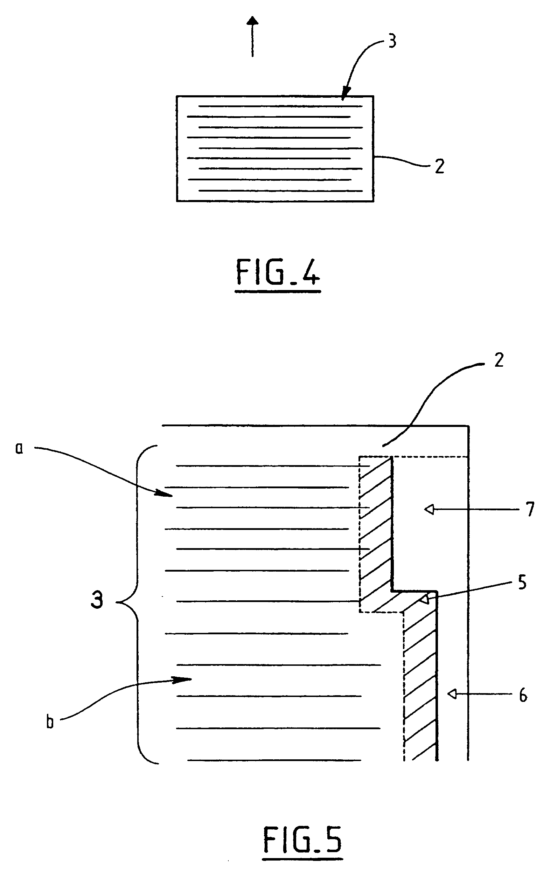

Par ailleurs, ainsi qu'illustré sur les figures 4 à 6, on prévoit que les électrodes, référencées par 3 sur ces figures, ne débouchent pas à l'extérieur du piston 2, mais sont alimentées par des métallisations 5 qui s'étendent dans des rainures 6 que le piston 2 présente.

Ces rainures 6 présentent en particulier sur toute la hauteur du tronçon qu'elles alimentent (en l'occurrence le tronçon a) un renfoncement 7 qui s'étend vers l'intérieur et dans lequel leur métallisation 5 est en contact avec les électrodes 3.

Ainsi, les électrodes 3 n'affleurent pas à la surface la plus extérieure du piston 2, mais sont néanmoins alternativement décalées d'un côté ou de l'autre d'un diamètre du piston 2, de la façon qui est illustrée sur la figure 4.

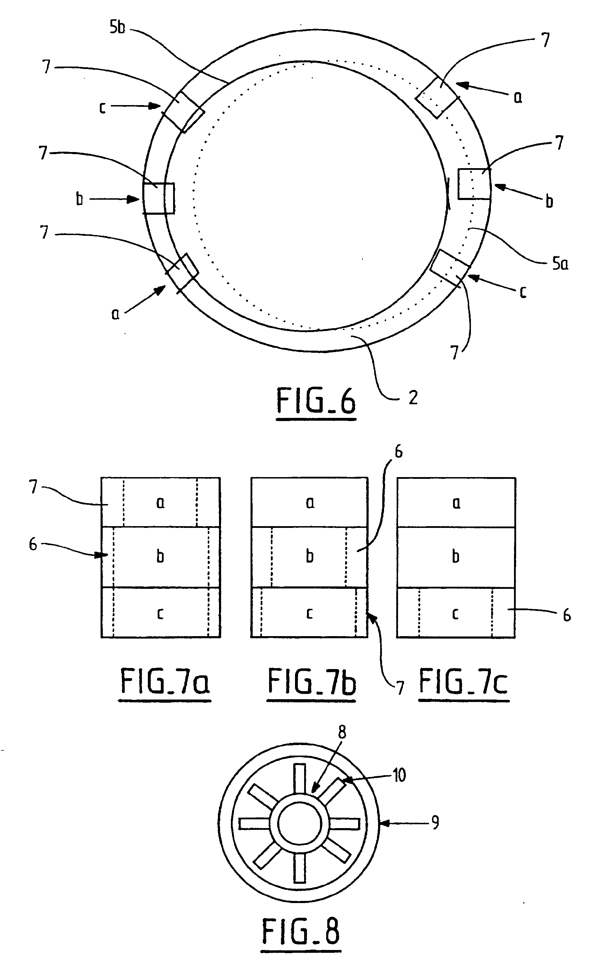

Comme le montrent la figure 6 et les figures 7a à 7c, les rainures 6 sont avantageusement réparties en étant angulairement décalées autour du piston 2.

Elles s'étendent toutes à partir d'une même extrémité du piston 2, dans la hauteur de celui-ci, en se terminant au niveau du renfoncement 7 du tronçon qu'elles alimentent. Au niveau des tronçons que leurs métallisations 5 n'alimente pas, les fonds de ces rainures 6 sont décalés vers l'extérieur par rapport au fond des enfoncement 7, de façon que lesdites métallisations 5 ne soient pas en contact avec les électrodes 3.

Sur la figure 6, on a représenté schématiquement par deux cercles 5a, 5b les circuits d'alimentation des différentes métallisations 5.

Par ailleurs, on sait qu'à la suite d'une sollicitation importante, par exemple du type de celle exercée lors du freinage d'un aéronef, la température des freins s'élève.

Une élévation importante de la température peut conduire à une dépolarisation des céramiques piezo électriques. La température à laquelle commence cette dépolarisation peut être destinée à 100°C en dessous de la température de Curie, ce qui donne environ 130°C pour une céramique douce et 230°C pour une céramique dure.

Pour éviter tout risque de dépolarisation, la commande électrique applique après le freinage une tension constante identique sur tous les tronçons du piston. Cette tension peut être plus forte que la tension maximale d'utilisation. Elle a pour effet de repolariser la céramique pendant que la température redescend d'une valeur élevée à l'ambiante.

Comme on l'aura compris, les modes de réalisations exposés ci-dessus supposent qu'au repos le jeu mécanique entre le piston 2 et le cylindre 1 dans lequel il coulisse, est nettement plus faible que l'augmentation de diamètre du piston 2 qui provoque son blocage (soit environ 10 µm dans l'exemple donné).

Il est envisageable de réaliser des ajustages de quelques µm de jeu à une température (température ambiante par exemple).

Par contre, il est difficile de conserver ce jeu pour des excursions de température allant de -60° C à +200° C comme il est rencontré dans les freins. Ceci est dû à la dilatation différentielle entre le piston 2 et le cylindre 1 qui peuvent avoir des coefficients de dilatation thermique différents.

Un appariement de grande précision est nécessaire. Or il s'avère que les céramiques piezo électriques utilisées pour le piston ont un coefficient de dilatation très faible, voire négatif. Il n'est donc pas aisé de trouver le matériau du cylindre ayant le coefficient exactement adapté d'autant plus que l'on recherche d'autres propriétés comme la tenue mécanique, l'usinabilité, etc.

La structure de cylindre ou chemise de coulissement représentée sur la figure 8 permet d'obtenir et de régler cet accord à la conception à l'aide de matériaux traditionnels. Le dispositif est composé de trois matériaux montés coaxialement.

Elle comporte un cylindre intérieur 8 dans lequel coulisse le piston 2, un cylindre externe 9 et un cylindre intermédiaire 10 qui s'étend entre le cylindre intérieur 8 et le cylindre externe 9.

Le cylindre 9 précontraint, en les serrant le cylindre 8 et le cylindre intermédiaire 10.

Ce cylindre intermédiaire 10 comporte des fentes radiales 11 qui s'étendent à partir de génératrices d'un cylindre intérieur 8. Ces fentes 11 sont assez profondes pour arriver au voisinage de la surface extérieure dudit cylindre intérieur 8 et peuvent éventuellement être débouchantes.

Le ou les matériaux des cylindres 8 et 9 sont choisis avec des coefficients de dilatation faibles, mais néanmoins algébriquement supérieurs à celui du piston.

Le matériau du cylindre intermédiaire 10 est choisi avec un coefficient de dilatation supérieur.

Lorsque la température augmente, le cylindre 10 se dilate radialement, mais il est partiellement empêché par le cylindre 9 qui se dilate moins que lui.

En conséquence, l'expansion extérieure interdite est reportée sur le cylindre 8 qui se trouve radialement comprimé. Les fentes 11 ont un rôle capital pour empêcher la formation de contraintes orthoradiales qui empêcheraient toute expansion du cylindre 10 vers l'intérieur. Pour que les fentes 11 ne créent pas d'ondulation sur le cylindre 8, on choisit pour lesdites fentes une largeur inférieure à l'épaisseur dudit cylindre 8. L'expansion du cylindre 10 contraint le cylindre 9 à l'expansion, tandis que lorsque le cylindre 9 se comprime, il contraint le cylindre 8. Les déformations relatives des cylindres 8 et 9 se répartissent au prorata de l'inverse de leur raideur. Plus le cylindre 9 est épais et raide, plus le cylindre 8 sera comprimé.

On ajuste par conséquent le coefficient de dilatation interne du cylindre 8 en jouant sur l'épaisseur du cylindre 9. Un usinage externe constitue donc un moyen d'ajustage final du coefficient de dilatation interne, sachant que ce dernier ne pourra évoluer que vers une valeur algébrique plus grande.

Bien entendu, le terme cylindre utilisé dans les développements qui précèdent doit être entendu au sens large. Il désigne de façon générale toute forme définie par un ensemble de génératrices parallèles s'appuyant sur une même surface fermée.

L'actionneur qui vient d'être décrit est avantageusement utilisé pour équiper des étriers de frein, et plus particulièrement des étriers de frein d'avions.

## Revendications

1. Actionneur comportant une chemise de coulissement (1) et un piston (2) apte à se déplacer axialement dans ladite chemise, ledit piston comportant une pluralité de tronçons (a,b,c) successifs en matériau multicouches piezo électriques, des moyens de commande étant aptes à appliquer sur lesdits tronçons des tensions de commande pour dilater des tronçons de façon à ce qu'ils se bloquent par rapport à la chemise de coulissement et allonger d'autres tronçons à l'intérieur de ladite chemise, ces dilatations et allongements étant commandés par lesdits moyens de commande selon des séquences déplaçant le piston dans ladite chemise, **caractérisé en ce que** les moyens de commande sont aptes à appliquer à chacun des tronçons (a,b,c) une tension qui raccourcit ledit tronçon et le bloque dans la chemise de coulissement (1) et une tension inverse qui libère ledit tronçon par rapport à ladite chemise et qui l'allonge dans celle-ci, l'une et l'autre de ces deux tensions étant successivement appliquées audit tronçon lors d'une séquence de déplacement du piston (2), chaque tronçon étant ainsi utilisé en blocage et en allongement lors d'une telle séquence.

2. Actionneur selon la revendication 1, **caractérisé en ce qu'**un tronçon présente une pluralité d'électrodes qui s'étendent transversalement par rapport à l'axe du piston, au moins une métallisation de commande électrique s'étendant sur au moins une partie de la hauteur du piston jusqu'à un renfoncement dans lequel la métallisation est en contact avec une électrode sur deux du tronçon, les électrodes du tronçon étant alternativement décalées par rapport audit renfoncement, la métallisation étant, au niveau des tronçons qu'elle n'alimente pas, décalée par rapport au renfoncement de façon à ne pas être en contact avec les électrodes de ces tronçons.

3. Actionneur selon la revendication 2, **caractérisé en ce que** le piston comporte une enveloppe métallique dans laquelle les tronçons sont reçus, une métallisation de commande étant reçue dans une rainure qui s'étend dans la hauteur du piston.

4. Actionneur selon l'une des revendications précédentes, **caractérisé en ce que** la chemise de coulissement comporte un cylindre intérieur, un cylindre extérieur et un cylindre intermédiaire, le matériau du cylindre intermédiaire présentant un coefficient de dilatation supérieur à ceux des cylindres intérieur et extérieur.

5. Actionneur selon la revendication 4, **caractérisé en ce que** le cylindre intermédiaire présente des fentes qui s'étendent radialement de sa surface intérieure vers sa surface extérieure.

6. Actionneur selon la revendication 1, **caractérisé en ce que** les moyens de commande comportent des moyens pour commander la déformation des tronçons selon une séquence telle que dans un premier temps, le piston avance de façon à rattraper le jeu qui le sépare de la surface sur laquelle il doit venir en appui et dans un deuxième temps applique un effort sur ladite surface.

7. Actionneur de frein, **caractérisé en ce qu'**il est constitué par un actionneur selon l'une des revendications précédentes.

## Claims

1. An actuator comprising a guide jacket (1) and a piston (2) suitable for moving axially in said jacket, said piston comprising a plurality of successive segments (a, b, c) of multilayer piezoelectric material, said actuator including control means suitable for applying control voltages to said segments to cause the segments to expand in such a manner that they become blocked relative to the guide jacket and to lengthen other segments inside said jacket, these expansions and lengthenings being controlled by said control means in sequences that displace the piston in said jacket, the actuator being **characterized in that** the control means are suitable for applying a voltage to each of the segments (a, b, c) to shorten said segment and block it in the guide jacket (1) and an opposite voltage which releases said segment relative to said jacket and lengthens it therein, these two voltages being applied in succession to said segment during a displacement sequence of the piston (2), each segment thus being used for blocking purposes and for lengthening purposes during such a sequence.

2. An actuator according to claim 1, **characterized in that** a segment presents a plurality of electrodes which extend transversely relative to the axis of the piston, at least one piece of electrical control metallization extending over at least a portion of the height of the piston to a setback in which the metallization is in contact with every other electrode of the segment, the electrodes of the segments being offset in alternation relative to said setback, the metallization in register with segments that it does not feed being offset relative to the setback so that it does not come into contact with the electrodes of said segments.

3. An actuator according to claim 2, **characterized in that** the piston has a metal case in which the segments are received, control metallization being received in a groove which extends in the height of the piston.

4. An actuator according to any preceding claim, **characterized in that** the guide jacket comprises an inner cylinder, an outer cylinder, and an intermediate cylinder, the material of the intermediate cylinder having a coefficient of expansion greater than the coefficients of the inner and outer cylinders.

5. An actuator according to claim 4, **characterized in that** the intermediate cylinder presents slots extending radially from its inner surface towards its outer surface.

6. An actuator according to claim 1, **characterized in that** the control means comprise means for causing the segments to deform in a sequence such that initially the piston advances so as to take up the slack which separates it from the surface against which it is to bear, and subsequently it applies a force against said surface.

7. A brake actuator, **characterized in that** it is constituted by an actuator according to any preceding claim.

## Patentansprüche

1. Aktor, umfassend einen Gleitmantel (1), sowie einen Kolben (2), der geeignet ist, sich axial im Mantel zu bewegen, wobei der Kolben mehrere aufeinanderfolgende Abschnitte (a,b,c) aus mehrlagigem piezoelektrischen Material umfasst, Steuermittel, die geeignet sind, an diese Abschnitte Steuerspannungen anzulegen, um Abschnitte derart auszudehnen, dass sie in Bezug auf den Gleitmantel blockieren, und um andere Abschnitte im Inneren des Gleitmantels zu strecken, wobei diese Ausdehnungen und Streckungen von den Steuermitteln entsprechend Sequenzen gesteuert werden, die den Kolben im Mantel bewegen,
**dadurch gekennzeichnet, dass**
die Steuermittel geeignet sind, an jeden der Abschnitte (a,b,c) eine Spannung anzulegen, die den Abschnitt verkürzt und ihn im Gleitmantel (1) blockiert und eine inverse Spannung, die den Abschnitt in Bezug auf den Mantel freigibt und die ihn in diesem streckt, wobei die eine und die andere dieser beiden Spannungen hintereinander an den Abschnitt bei einer Bewegungssequenz des Kolben (2) angelegt werden, wobei auf diese Weise bei einer solchen Sequenz jeder Abschnitt in Blockade und in Ausdehnung verwendet wird.

2. Aktor gemäß Anspruch 1, **dadurch gekennzeichnet, dass** ein Abschnitt mehrere Elektroden aufweist, die sich quer zur Kolbenachse erstrecken, wenigstens eine elektrische Steuermetallisierung, die sich auf wenigstens einem Teil der Kolbenhöhe bis zu einem Einzug erstreckt, in der die Metallisierung in Kontakt mit einer von zwei Elektroden des Abschnitts ist, wobei die Elektroden des Abschnitts in Bezug auf den Einzug abwechselnd versetzt sind, wobei die Metallisierung auf Höhe der Abschnitte, die sie nicht versorgt, in Bezug auf den Einzug dergestalt versetzt ist, dass sie nicht mit den Elektroden dieser Abschnitte in Kontakt ist.

3. Aktor gemäß Anspruch 2, **dadurch gekennzeichnet, dass** der Kolben eine metallische Umhüllung umfasst, in der die Abschnitte aufgenommen sind, wobei eine Steuermetallisierung in einer Rille aufgenommen ist, die sich in der Höhe des Kolbens erstreckt.

4. Aktor gemäß einem der vorhergehenden Ansprüche, **dadurch gekennzeichnet, dass** der Gleitmantel einen inneren Zylinder umfasst, einen äußeren Zylinder und einen mittleren Zylinder, wobei das Material des mittleren Zylinders einen Ausdehnungskoeffizienten aufweist, der höher ist als der des inneren und äußeren Zylinders.

5. Aktor gemäß Anspruch 4, **dadurch gekennzeichnet, dass** der mittlere Zylinder Schlitze aufweist, die sich radial von seiner inneren Oberfläche zu seiner äußeren Oberfläche erstrecken.

6. Aktor gemäß Anspruch 1, **dadurch gekennzeichnet, dass** die Steuermittel Mittel umfassen, um die Deformierung der Abschnitte entsprechend einer Sequenz so zu steuern, dass bei einem ersten Mal der Kolben sich vorwärts bewegt, um das Spiel zu beseitigen, das ihn von der Oberfläche trennt, auf der er in Auflage kommen muss und bei einem zweiten Mal einen Druck auf die Oberfläche ausübt.

7. Bremsaktor, **dadurch gekennzeichnet, dass** er von einem Aktor nach einem der vorhergehenden Ansprüche gebildet wird.
